# EUROPÄISCHE PATENTSCHRIFT

(11) **EP 1 017 931 B1**
(45) Veröffentlichungstag und Bekanntmachung des Hinweises auf die Patenterteilung: **10.12.2003**
(21) Anmeldenummer: 98948795.4
(22) Anmeldetag: 14.08.1998
(51) Int. Cl.: F02D 41/18, G01F 1/684

(54) **SENSOR FÜR EINE BRENNKRAFTMASCHINE ZUR BESTIMMUNG DER VON IHR ANGESAUGTEN LUFT**
SENSOR FOR DETERMINING THE AIR INDUCED BY AN INTERNAL COMBUSTION ENGINE
CAPTEUR POUR LA DETERMINATION DE L'AIR ASPIRE PAR UN MOTEUR A COMBUSTION INTERNE

(30) Priorität: 14.11.1997 DE 19750496
(43) Veröffentlichungstag der Anmeldung: 12.07.2000
(73) Patentinhaber: ROBERT BOSCH GMBH, 70442 Stuttgart (DE); Volkswagen AG, 38436 Wolfsburg (DE)
(72) Erfinder: STROHRMANN, Manfred, D-76137 Karlsruhe (DE); MÜLLER, Wolfgang, D-71277 Rutesheim (DE); KONZELMANN, Uwe, D-71679 Asperg (DE); Mussert, Piet-Christian, 38466 Wolfsburg (DE)
(86) Internationale Anmeldenummer: DE9802354
(87) Internationale Veröffentlichungsnummer: WO99025971

(56) Entgegenhaltungen:
- EP-A- 0 352 861
- EP-A- 0 704 687
- FR-A- 2 442 966
- GB-A- 1 543 042
- PATENT ABSTRACTS OF JAPAN vol. 007, no. 279 (M-262), 13. Dezember 1983 & JP 58 155247 A (TOYO KOGYO KK), 14. September 1983
- PATENT ABSTRACTS OF JAPAN vol. 017, no. 357 (P-1568), 6. Juli 1993 & JP 05 052625 A (HITACHI LTD;OTHERS: 01), 2. März 1993
- PATENT ABSTRACTS OF JAPAN vol. 007, no. 223 (M-247), 4. Oktober 1983 & JP 58 117333 A (TOYO KOGYO KK), 12. Juli 1983
- PATENT ABSTRACTS OF JAPAN vol. 016, no. 070 (P-1315), 20. Februar 1992 & JP 03 262923 A (MITSUBISHI HEAVY IND LTD), 22. November 1991
- PATENT ABSTRACTS OF JAPAN vol. 018, no. 187 (P-1720), 30. März 1994 & JP 05 346336 A (MITSUBISHI ELECTRIC CORP), 27. Dezember 1993

## Beschreibung

Die Erfindung betrifft einen Sensor zur Bestimmung der von einer Brennkraftmaschine angesaugten Luft, wobei die Luftmasse von einem Luftmassenmesser erfaßt wird.

Seit längerem ist es bekannt, die von einer Brennkraftmaschine eines Kraftfahrzeugs angesaugte Luftmasse mittels eines Luftmassenmessers zu erfassen.

Die erfaßte Luftmasse wird in einer Motorsteuerung zusammen mit anderen für den Verbrennungsvorgang relevanten Daten, wie beispielsweise die Temperatur oder der Saugrohrdruck, zur Berechnung von Einspritzzeiten u.dgl. verarbeitet.

Bei einer sehr feuchten Umgebungsluft wird aufgrund der Luftfeuchtigkeit der von dem Luftmassenmesser erfaßte Luftmassenstrom dadurch verfälscht, daß neben der in der Brennkraftmaschine verbrennbaren Luft gleichzeitig auch Wasserdampf erfaßt wird, der nicht verbrannt werden kann und daher zu sehr nachteiligen Änderungen der Emissionswerte führt . So ist aus der JP 05 05 26 25 A die Messung der Luftmasse und die Kompensation bei Luftfeuchte = änderungen bekannt.

Bei der Vorrichtung nach der JP 05 346 336 A wird parallel zu einem von einem volumenshownsensor ermittelten signal einem Steuergerät das signal eines Luftvolumenkorrektorsensors, der Atmosphärendruck und Feuchtigkeit erfaßt, eingegeben.

Bekannt ist ebenfalls aus der EP 0 352 861 A mittels Sensoren eine Bestimmung der Luftmasse, der Luftfeuchtigkeit und des Ansaugdruckes.

Der Erfindung liegt die Aufgabe zugrunde, einen Sensor für eine Brennkraftmaschine umfassend einen Luftmassenmesser mit einem Sensorelement zur Erfassung der angesaugten Luftmasse dahingehend zu verbessern, daß neben der Luftmasse auch noch die Feuchtigkeit und der Saugrohrdruck auf einfache Weise erfaßbar sind.

Diese Aufgabe wird bei einem Sensor für eine Brennkraftmaschine umfassend einen Luftmassenmesser mit einem Sensorelement zur Erfassung der angesaugten Luftmasse erfindungsgemäß dadurch gelöst, daß benachbart zu dem Luftmassenmesser bzw. dessen Sensorelement ein Feuchtesensor und ein Drucksensor sowie eine Auswerteschaltung zur Verarbeitung der von dem Luftmassenmesser bzw. dessen Sensorelement, dem Feuchtesensor und dem Drucksensor ausgegebenen Daten vorgesehen und in einem einzigen Gehäuse angeordnet sind.

Ein derartiger Sensor hat den besonders großen Vorteil, daß neben der Luftmasse auch deren Feuchtigkeit und Druck nicht nur erfaßt, sondern auch bereits im Sensor verarbeitet werden. Durch einen solchen Sensor können die erfaßten Daten aufgrund der in ihm angeordneten Auswerteschaltung vorteilhafterweise über wenige Anschlußleitungen an eine Steuerschaltung übermittelt werden. Ein derartiger Sensor eignet sich daher insbesondere auch zum Anschluß an ein Bus-System, welches nur zwei Datenleitungen benötigt. Darüber hinaus kann ein derartiger Sensor sehr kompakt aufgebaut werden.

So ist beispielsweise bei einer vorteilhaften Ausführungsform vorgesehen, daß der Luftmassenmesser bzw. das Sensorelement und der Drucksensor mikromechanische Bauteile sind. Dabei kann vorgesehen sein, daß das Sensorelement des Luftmassenmessers und der Drucksensor auf einem Chip oder einem plättchenförmigen Keramikbauteil angeordnet sind, wodurch nicht nur eine besonders kleine Bauform resultiert, sondern insbesondere auch sichergestellt ist, daß sowohl die Luftmasse als auch die Luftfeuchtigkeit praktisch am selben Ort erfaßt werden. Bei einer anderen vorteilhaften Ausführungsform ist vorgesehen, daß der Luftmassenmesser bzw. dessen Sensorelement und der Drucksensor auf zwei voneinander beabstandeten Chips angeordnet sind. In diesem Falle kann die Druckmessung dann über eine bestimmte, vorgebbare Laufstrecke z.B. innerhalb des Luftmassenmeßrohrs erfolgen.

Weitere Merkmale und Vorteile der Erfindung sind Gegenstand der nachfolgenden Beschreibung sowie der zeichnerischen Darstellung.

In der Zeichnung zeigen:
- Fig. 1: ein Ausführungsbeispiel eines Sensors für eine Brennkraftmaschine, der von der Erfindung Gebrauch macht;
- Fig. 2: eine weitere Darstellung eines Sensors gemäß Figur 1 für eine Brennkraftmaschine, der von der Erfindung Gebrauch macht;
- Fig. 3 bis Fig. 5: zeigen sensoren für erlänternde Zwecke.

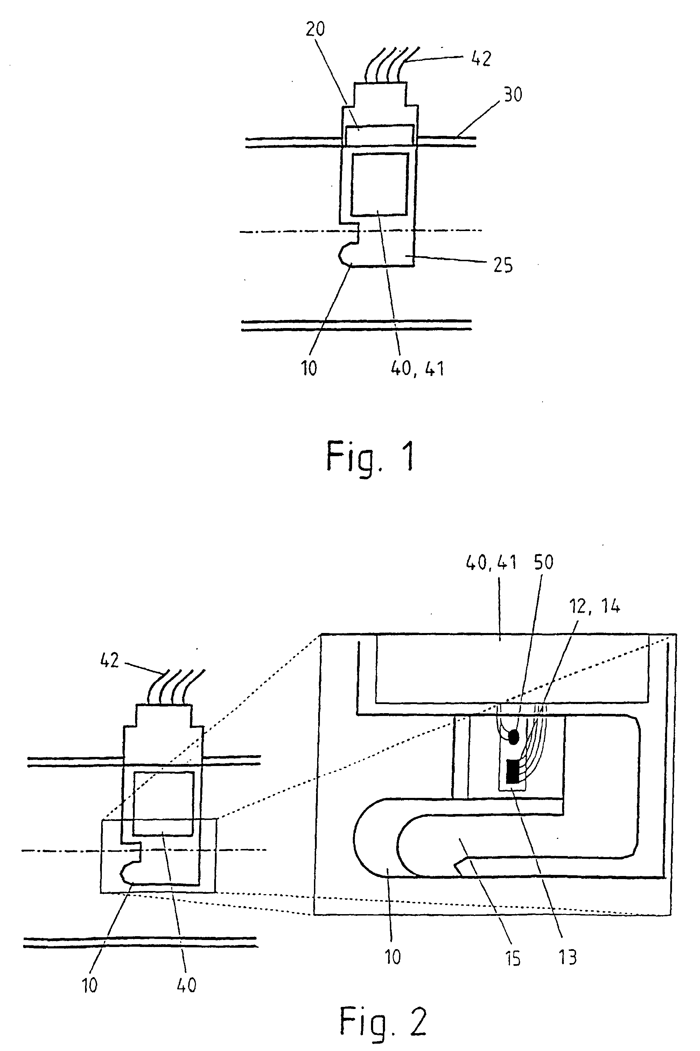

In Fig. 1 ist eine Kombination aus einem an sich bekannten Luftmassenmesser 10 und einem beispielsweise aus der DE 38 29 517 A1 bekannten Feuchtesensor 20, die in einem Saugrohr 30 einer Brennkraftmaschine angeordnet sind, dargestellt. Bei dem in Fig. 1 dargestellten Ausführungsbeispiel ist der Luftmassenmesser 10 und der Feuchtesensor 20 Gegenstand eines einzigen Gehäuses 25, in dem darüber hinaus auch ein Hybridraum 40 vorgesehen ist, in dem eine beispielsweise in Hybridtechnik aufgebaute elektronische Auswerteschaltung untergebracht ist, welche die von dem Luftmassenmesser 10 und dem Feuchtigkeitssensor 20 erfaßten Daten auswertet und über Leitungen 42 beispielsweise an ein (in Fig. 1 nicht dargestelltes) Steuergerät ausgibt.

Der Luftmassenmesser 10 besitzt, wie Fig. 2 näher zeigt, ein temperaturempfindliches Sensormittel 14, das als mikromechanisches Bauteil ausgebildet ist. Ein mit einem derartigen Sensorelement ausgestatteter Luftmassenmesser ist dem Fachmann aus der DE 44 07 209 C2 bekannt, deren Offenbarung ausdrücklich Bestandteil der hier vorliegenden Patentanmeldung sein soll. Selbstverständlich kann der Luftmassenmesser 10 auch als sogenannter Heißfilm-Luftmassenmesser aufgebaut sein, der als Sensorelement ein mit temperaturabhängigen Widerstandsschichten versehenes plättchenförmiges Keramiksubstrat aufweist, wie es zum Beispiel aus der DE 36 38 138 A1 hervorgeht.

Durch die simultane Erfassung der Luftfeuchtigkeit ist bei dem erfaßten Luftmassenstrom der Teil der angesaugten Luft, der von der Brennkraftmaschine verbrennbar ist, von Wasser im gasförmigen Zustand unterscheidbar. Hierdurch wird die Präzision, beispielsweise bei der Berechnung des Lastsignals wesentlich erhöht, da nur die Anteile der erfaßten Luft berücksichtigt werden können.

Wie aus Fig. 1 hervorgeht, kann der Feuchtesensor 20 zusammen mit dem Luftmassenmesser 10 und der Auswerteschaltung 41 in einem Gehäuse 25 angeordnet sein.

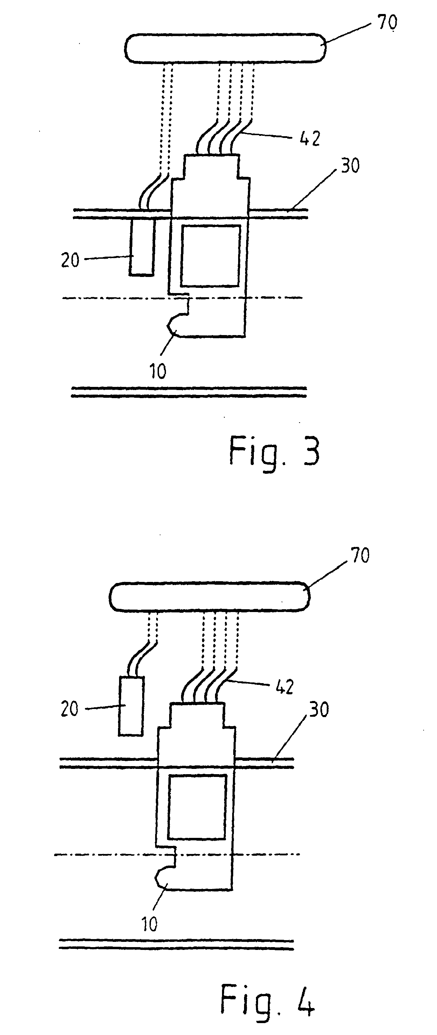

Möglich ist es aber auch, in nicht erfindungsgemäßer Weise die Feuchte durch einen außerhalb des eigentlichen Luftmassenmessers 10 in dem Saugrohr 30 angeordneten Feuchtesensor 20 zu erfassen, wobei die von dem Luftmassenmesser 10 und dem Feuchtesensor 20 ausgegebenen Daten einem Steuergerät 70 zugeführt und verarbeitet werden (vgl. Fig. 3).

Darüber hinaus kann der Feuchtesensor 20 in nicht erfindungsgemäßer Weise auch außerhalb des Saugrohrs 30 angeordnet sein. In diesem Falle kann. er für weitere Steuerzwecke des Fahrzeugs, beispielsweise für das selbsttätige Einschalten der Scheibenwischer oder der Beleuchtung o.dgl. verwendet werden (vgl. Fig. 4).

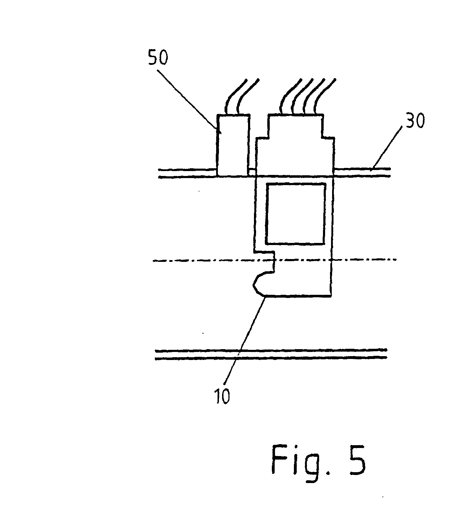

Neben dem in dem Gehäuse 25 des Luftmassenmessers 10 angeordneten Feuchtesensor 20 ist darüber hinaus auch ein Drucksensor 50 angeordnet, wie es aus Fig. 2 hervorgeht. Dabei können sowohl der Drucksensor 50 als auch der eigentliche Luftmassenmesser 12 bzw. sein Sensorelement 14 als mikromechanische Bauteile ausgeführt sein, die auf einem gemeinsamen Chip 13 oder Keramiksubstrat zum Beispiel in einem Bypasskanal 15 des Luftmassenmessers 10 angeordnet sind. Darüber hinaus ist es aber auch in nicht erfindungsgemäßer Weise möglich, daß der Drucksensor 50 außerhalb des Luftmassenmessers 10 in dem Saugrohr 30 angeordnet ist, wie es aus Fig. 5 hervorgeht. Dabei kann der Drucksensor ebenfalls aus einem mikromechanischen Bauteil bestehen oder auf an sich bekannte und beispielsweise aus der DE 43 17 312 A1 hervorgehende Weise aufgebaut sein.

Es versteht sich, daß die in Fig. 2 dargestellte Kombination von Luftmassenmesser 10 bzw. dessen Sensorelement 14 und Drucksensor 50 auf die im Zusammenhang mit Fig. 1 beschriebene Weise mit einem Feuchtesensor 20 kombiniert ist. Somit umfaßt der Sensor für die Brennkraftmaschine einen Luftmassenmesser 10, einen Feuchtesensor 20 und einen Drucksensor 50, wobei dieser Sensor zusammen mit einer Auswerteschaltung in einem gemeinsamen Gehäuse angeordnet ist.

Dabei können das Sensorelement 14 des Luftmassenmessers 10, der Feuchtesensor 20 und der Drucksensor 50 auch auf einen gemeinsamen Chip oder Keramiksubstrat aufgebracht sein, der sich vorzugsweise im Bypasskanal 15 des Luftmassenmessers 10 befindet.

## Patentansprüche

1. Sensor für eine Brennkraftmaschine, umfassend einen Luftmassenmesser (10) mit einem Sensorelement (14) zur Erfassung der angesaugten Luftmasse, wobei benachbart zu dem Luftmassenmesser (10) bzw. dessen Sensorelement (14) ein Feuchtesensor (20) und ein Drucksensor (50) sowie eine Auswerteschaltung (41) zur Verarbeitung der von dem Luftmassenmesser (10) bzw. dessen Sensorelement (14), dem Feuchtesensor (20) und dem Drucksensor (50) ausgegebenen Daten vorgesehen und in einem einzigen Gehäuse (25) angeordnet sind.

2. Sensor nach Anspruch 1, **dadurch gekennzeichnet, dass** das Sensorelement (14) des Luftmassenmessers (10) und der Drucksensor (50) mikromechanische Bauteile sind.

3. Sensor nach Anspruch 2, **dadurch gekennzeichnet, dass** das Sensorelement (14) des Luftmassenmessers (10) und der Drucksensor (50) auf einem Chip (13) angeordnet sind.

4. Sensor nach Anspruch 2, **dadurch gekennzeichnet, dass** das Sensorelement ( 14) des Luftmassenmessers (10) und der Drucksensor (50) auf zwei voneinander beabstandeten Chips angeordnet ist.

## Claims

1. Sensor for an internal combustion engine, comprising an air-mass meter (10) with a sensor element (14) for detecting the induced air mass, there being provided adjacently to the air-mass meter (10) or its sensor element (14) and being arranged in a single housing (25) a moisture sensor (20) and a pressure sensor (50) and also an evaluation circuit (41) for processing the data emitted by the air-mass meter (10) or its sensor element (14), by the moisture sensor (20) and by the pressure sensor (50).

2. Sensor according to Claim 1, **characterized in that** the sensor element (14) of the air-mass meter (10) and the pressure sensor (50) are micromechanical components.

3. Sensor according to Claim 2, **characterized in that** the sensor element (14) of the air-mass meter (10) and the pressure sensor (50) are arranged on a chip (13).

4. Sensor according to Claim 2, **characterized in that** the sensor element (14) of the air-mass meter (10) and the pressure sensor (50) are arranged on two chips spaced apart from one another.

## Revendications

1. Capteur pour un moteur à combustion interne regroupant un dispositif de mesure de masse d'air (10) avec un élément de capteur (14) pour déterminer la masse d'air aspirée, avec à côté du dispositif de mesure de masse d'air (10), respectivement de son élément de capteur (14), un capteur d'humidité (20) et un capteur de pression (50) ainsi qu'un circuit de calcul (41) pour traiter les données fournies par le dispositif de mesure de masse d'air (10), respectivement son élément de capteur (14), le capteur d'humidité (20) et le capteur de pression (50), et ces dispositifs soient disposés dans un même boîtier (25).

2. Capteur selon la revendication 1,
**caractérisé en ce que**
l'élément de capteur (14) du dispositif de mesure de masse d'air (10) et le capteur de pression (50) sont des pièces micro-mécaniques.

3. Capteur selon la revendication 2,
**caractérisé en ce que**
l'élément de capteur (14) du dispositif de mesure de masse d'air (10) et le capteur de pression (50) sont disposés sur une puce (13).

4. Capteur d'après la revendication 2,
**caractérisé en ce que**
l'élément de capteur (14) du dispositif de mesure de masse d'air (10) et le capteur de pression (50) sont disposés sur deux puces séparées l'une de l'autre.
